# EUROPÄISCHE PATENTANMELDUNG

(11) **EP 1 155 793 A1**
(43) Veröffentlichungstag der Anmeldung: **21.11.2001**
(21) Anmeldenummer: 01111020.2
(22) Anmeldetag: 08.05.2001
(51) Int. Cl.: B27D 1/08, B27D 5/00, B29C 63/04

(54) **Ummantelungsmaschine mit am Maschinengestell lösbaren Halteringen**

(30) Priorität: 19.05.2000 DE 10024926
(71) Anmelder: Wessel, Karl-Heinz, 32602 Vlotho (DE); MANTELPROFILWERK BERG GmbH, 33397 Rietberg (DE)
(72) Erfinder: Wessel, Karl-Heinz, 32602 Vlotho (DE)
(74) Vertreter: Elbertzhagen, Otto, Dipl.-Ing.

(57) **Zusammenfassung**

Eine solche Maschine hat eine Vorrichtung (2), auf der die Werkstücke (3) in Längsrichtung gefördert werden und die von mehreren, in Vorschubrichtung hintereinander angeordneten Halteringen (4) umgeben ist. Die Ebenen der Halteringe (4) stehen senkrecht zur Vorschubrichtung. An Haltearmen (5) der Halteringe (4) sind Rollen (6) zum Heranführen und/oder Andrücken des Beschichtungsmaterials an die hindurchlaufenden Werkstücke (3) angeordnet. Die Halteringe (4) sind vom Maschinengestell (1) lösbar. Zwecks kürzerer Rüstzeiten sind am Maschinengestell (1) hilfskraftbetätigte Schnellspannvorrichtungen (8) angeordnet, und die darauf aufsetzbaren Halteringe (4) haben an ihren Unterseiten entsprechende Schnellspannaufnahmen (19).

## Beschreibung

Die Erfindung bezieht sich auf eine Maschine der im Gattungsbegriff des Patentanspruchs 1 näher bezeichneten Art. Mit einer derartigen Maschine können nicht nur längliche Werkstücke aus Holz oder aus holzartigen Materialien, sondern auch Werkstücke aus Kunststoff und Metallen beispielsweise ummantelt werden.

Eine solche Maschine ist aus der Offenlegungsschrift EP 0 732 189 A2 bekannt. Dort sitzen die Halteringe auf verschiebbaren Supporten, an denen die Halteringe mittels manuell zu betätigenden Klemmvorrichtungen gesichert werden. Hierfür ist der Einsatz von Werkzeugen erforderlich, die mehrmals an den einzelnen Sicherungsstellen angesetzt werden müssen. Dadurch ist das Umrüsten bei der bekannten Maschine, nämlich der Wechsel der Halteringe, sehr zeitaufwendig. Bei der kommissionsweisen Fertigung ummantelter Werkstücke mit kleineren Losgrößen ist bei den fest eingestellten Andrück- und Zuführwerkzeugen an den Halteringen ein oftmaliges Umrüsten erforderlich, wodurch bei der bekannten Maschine häufigere Stillstandszeiten in Kauf genommen werden müssen, zumal stets eine Vielzahl der Halteringe ausgetauscht werden muß.

Der Erfindung liegt deshalb die Aufgabe zugrunde, eine Maschine der gattungsgemäßen Art zu schaffen, die mit kürzeren Rüstzeiten beim Wechsel der Halteringe auskommt.

Diese Aufgabe wird bei einer gattungsgemäßen Maschine nach der Erfindung durch die kennzeichnenden Merkmale des Patentanspruchs 1 gelöst.

Für die Erfindung ist wesentlich, daß die Halteringe am Maschinengestell hilfskraftbetätigt sowohl gespannt als auch gelöst werden. Es genügt daher beim Austausch, zunächst die vorhandenen Halteringe durch Ansteuern der Schnellspannvorrichtungen am Maschinengestell zu lösen, die Halteringe zu entnehmen und die neu zum Einsatz kommenden Halteringe mit ihren Schnellspannaufnahmen auf die Schnellspannvorrichtungen am Maschinengestell aufzusetzen und die Schnellspannvorrichtungen durch entsprechende Steuerung der Hilfskraftantriebe zu fixieren. Bei einem aus einer Vielzahl von Halteringen bestehenden Satz kann somit eine Umrüstung der erfindungsgemäßen Maschine in sehr kurzer Zeit vorgenommen werden. Zudem kann eine notwendige Umrüstung der Halteringe, die ein Umsetzen oder Austauschen der Haltearme und/oder der Andruckrollen vorsehen kann, außerhalb der Maschine an einem gesonderten Rüstplatz vorgenommen werden.

Vorteilhafte Ausgestaltungsmerkmale der Erfindung ergeben sich aus den Unteransprüchen.

Die Erfindung wird nachfolgend anhand der Zeichnung an einem Ausführungsbeispiel noch näher erläutert. Dabei zeigen:
- Fig. 1: einen Querschnitt durch eine Ummantelungsmaschine im Bereich der Halterung eines der Halteringe, an denen voreingestellte Zuführ- und Andruckrollen angeordnet sind,
- Fig. 2: die Seitansicht des in Fig. 2 wiedergegebenen Halterings,
- Fig. 3: eine vergrößerte Wiedergabe der Einzelheit "X" in Figur 2 und
- Fig. 4: eine Stirnansicht einer Ummantelungsmaschine in anderer Ausführung der Halteringe.

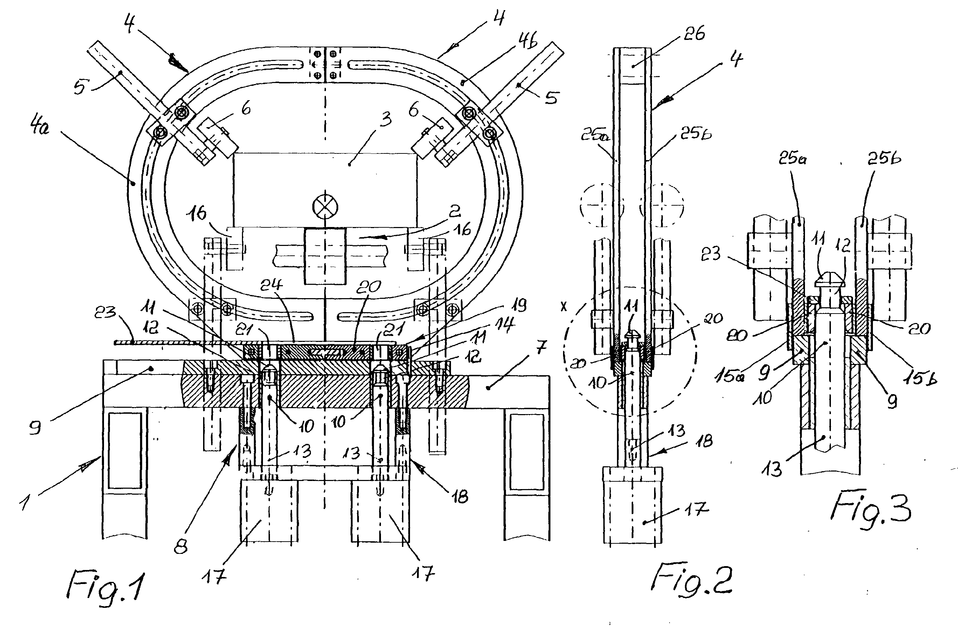

Im einzelnen erkennt man in Fig. 1 ein Maschinengestell 1, welches an seiner Oberseite eine Vorschubvorrichtung 2 trägt, von der lediglich eine Antriebswalze dargestellt ist. Die Vorschubvorrichtung 2 erstreckt sich senkrecht zur Darstellungsebene und darauf werden längliche Werkstücke 3 transportiert, die in Reibkontakt mit den angetriebenen Walzen der Vorschubvorrichtung 2 stehen. Die Werkstücke 3 werden im Durchlauf ummantelt, dazu wird eine synchron mit den Werkstücken 3 mitlaufende Folie oder ein Furnier an die Werkstücke 3 herangeführt und daran angedrückt. Diese Folie ist in der Zeichnung nicht wiedergegeben.

Zur Führung und Anrückung der Folie dienen Zuführ- und Andruckrollen 6, die an Haltearmen 5 justierbar angeordnet sind. Die Haltearme 5 wiederum sind an Halteringen 4 angeordnet, die in einer Vielzahl in der Vorschubrichtung hintereinander auf dem Maschinengestell 1 angeordnet sind. Die Halteringe 4 können einstückige geschlossene Gebilde sein oder wie beim Ausführungsbeispiel nach den Fig. 1 bis 3 aus zwei voneinander trennbaren Ringhälften 4a und 4b bestehen. Jeder der Halteringe 4 ist austauschbar, entsprechend kann er vom Maschinengestell 1 abgenommen werden. Für jeden Haltering 4 ist eine Spannvorrichtung 8 vorgesehen, die an einer Quertraverse 7 der Maschinengestells 1 sitzt. Die Spannvorrichtung 8 umfaßt eine auf der Quertraverse 7 angeordnete Spannplatte 9, durch die hindurch vertikal ausgerichtete Verriegelungsbolzen 10 geführt sind. Die Verriegelungsbolzen 10 treten ebenfalls durch die Quertraverse 7 hindurch und sind in Höhenrichtung verschieblich. Sie haben an ihrem Oberende, welches über die Oberseite der Spannplatte 9 vorstehend ausgefahren werden kann, einen Kopf 11 mit einer Hinterschneidung 12, die ein Untergreifen des Bolzenkopfes 11 ermöglicht.

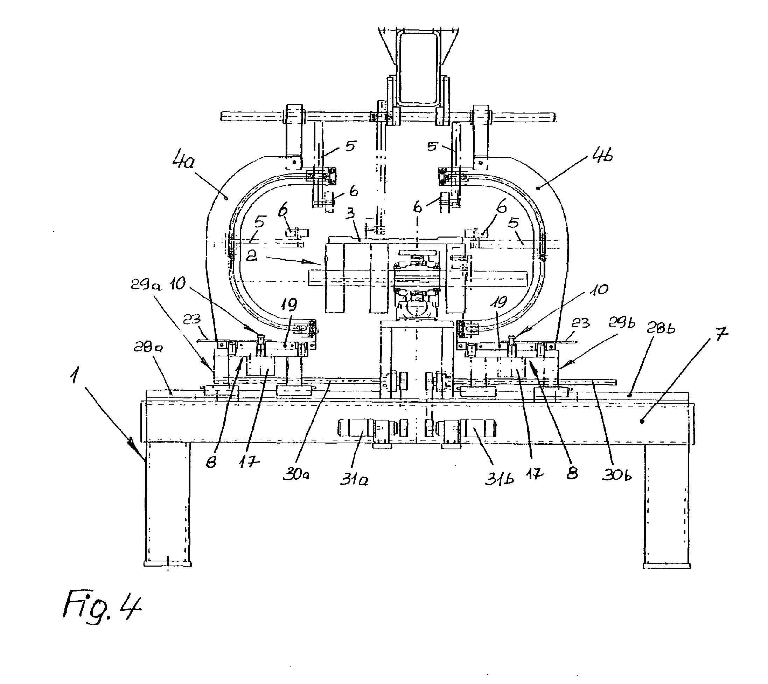

Die Schäfte der Verriegelungsbolzen 10 sind nach unten hin verlängert und gehen in eine Kolbenstange 13 über, die Teil eines vornehmlich pneumatisch arbeitenden Zylinders 17 ist. Für jeden der Verriegelungsbolzen 10 ist ein solcher Zylinder 17 vorgesehen, der an einem Traggestell 18 angebracht ist, welches an die Unterseite der Quertraverse 7 des Maschinengestells 1 angehängt ist. In Fig. 1 ist die abgesenkte Stellung der Verriegelungsbolzen 10 wiedergegeben. Hierbei sind die Köpfe 10 der Verriegelungsbolzen vollständig in die Spannplatte 9 eingesenkt, stehen also an der Oberseite der Spannplatte 9 nicht vor. Der Maximalhub, der mit den Verriegelungsbolzen ausgeführt werden kann, ergibt sich durch die obere Endlage der Verriegelungsbolzen 10, die in den Fig. 2 und 3 wiedergegeben ist. Dazwischen befindet sich die Spannlage der Verriegelungsbolzen, auf die nachstehend noch näher eingegangen werden wird.

Die Halteringe 4 haben an ihrer Unterseite eine auch in den Fig. 2 und 3 erkennbare Bodenplatte 20, die zwischen zwei Teilringen 25a und 25b angeordnet ist. Die beiden Teilringe 25a und 25b sind in ihren oberen Bereichen mittels eines Distanzhalters 26 miteinander verbunden. Die Halteringe 4 können ferner in der Vorschubrichtung bzw. der Längsrichtung des Maschinengestells 1 in eine linke Ringhälfte 4a und in eine rechte Ringhälfte 4b unterteilt sein, wie in Fig. 1 dargestellt ist. Hierbei ist entsprechend auch die Bodenplatte 20 unterteilt und an jeder Ringhälfte 4a und 4b ein Bodenplattenabschnitt angeordnet. Die Bodenplatte 20 hat Durchtrittsöffnungen 21, die beim Aufsetzen des Halteringes 4 mittels der Bodenplatte 20 auf die Spannplatte 9 der gestellseitigen Spannvorrichtung 8 in fluchtende Ausrichtung mit den Verriegelungsbolzen 10 gebracht werden kann. In der oberen Endlage der Verriegelungsbolzen 10 stehen die Bolzenköpfe 11 soweit über die Oberseite der Bodenplatte 20 des Halteringes 4 vor, daß unter den Kopf 11 jeweils ein Sicherungselement 23 eingeschoben werden kann, welches den Verriegelungsbolzen 10 im Bereich seiner Hinterschneidung 12 umgreift. Für die beiden Verriegelungsbolzen 10 kann ein gemeinsames Sicherungselement 23 vorgesehen werden, welches aus einem flachen Stahlstreifen besteht, der einen Längsschlitz 24 aufweist, welcher am einen Ende dieses Stahlstreifens offen ist. Werden durch Absenkung die Verriegelungsbolzen 10 in ihre Spannlage verfahren, sitzen die Bolzenköpfe 11 beidseits des Schlitzes 24 auf dem Sicherungselement 23 auf, und die hierbei auf das Sicherungselement 23 übertragene Spannkraft wirkt auf die Bodenplatte 20 des Halteringes 4 und verspannt somit diese Bodenplatte 20 gegen die Spannplatte 9 der gestellseitigen Spannvorrichtung 8. Wie ergänzend die Fig. 2 und 3 veranschaulichen, läßt sich das streifenförmige mit dem Schlitz 24 versehene Sicherungselement 23 auf die Oberseite der Bodenplatte 20 des Halteringes 4 aufschieben, und hierbei werden die Hinterschneidungen 12 unterhalb des Kopfes 11 der Verriegelungsbolzen 10 beidseits umgriffen.

Die Halteringe 4 können von einer der Längsseiten des Maschinengestells 1 auf die gestellseitige Spannplatte 9 aufgesetzt bzw. aufgeschoben werden. Wie die Fig. 2 und 3 deutlich machen, stehen beidseits der Spannplatte 9 Führungsschienen 15a und 15b nach oben vor, die miteinander parallel sind und die sich in Querrichtung des Maschinengestells 1 erstrecken. In den Zwischenraum zwischen den beiden Führungsschienen 15a und 15b können die Halteringe 4 mit ihren Unterseiten eingeschoben werden und zwar soweit, bis sie an einen Anschlag 14 anstoßen, der den Einschubweg für die Halteringe 4 zu der einen Längsseite des Maschinengestells 1 hin begrenzt. In dieser Position, in der sich die Unterseiten der Halteringe zwischen den Führungsschieneb 15a und 15b mit Formschlußsicherung in Längsrichtung des Maschinengestells 1 befinden und in der die Bodenplatte 20 der Halteringe 4 auf der Spannplatte 9 aufsitzt, sind die Durchgangsöffnungen 21 in der ringseitigen Bodenplatte 20 axial auf die verschieblichen Verriegelungsbolzen 10 ausgerichtet. Zunächst befinden sich die Verriegelungsbolzen 10 beim Aufschieben der Halteringe 4 in der in Fig. 1 dargestellten abgesenkten Lage und werden danach in die angehobene Position überführt, die in den Fig. 2 und 3 dargestellt ist. Dabei treten die Verriegelungsbolzen 10 mit ihren Köpfen 11 und der darunter befindlichen Hinterschneidung 12 durch die Durchgangsöffnungen 21 an der ringseitigen Bodenplatte 20 hindurch. Wie in den Fig. 2 und 3 gezeigt, kann danach das Sicherungselement 23 auf der Oberseite der Bodenplatte 20 liegend zwischen die Teilringe 25a und 25b der Halteringe 4 eingeschoben werden, wonach dann die Absenkung der Verriegelungsbolzen 10 in ihre Spannlage erfolgt. Hiernach liegen - wie bereits beschrieben - die vorstehenden Köpfe 11 der Verriegelungsbolzen 10 oberseitig auf dem Verriegelungselement 23 auf und verspannen über dieses die Bodenplatte des jeweiligen Halteringes 4 gegen die gestellseitige Spannplatte 9. In umgekehrter Bewegungsfolge können in einfacher Weise die Halteringe 4 von dem Maschinengestell 1 durch Verschieben in Querrichtung zum Maschinengestell 1 abgenommen werden.

Bei den in eine linke Ringhälfte 4a und in eine rechte Ringhälfte 4b unterteilten Halteringen 4 versteht es sich, daß jede Ringhälfte 4a und 4b von zumindest einem Verriegelungsbolzen 10 gesichert wird. Eine weiterentwickelte Variante, die nur mit geteilten Halteringen 4 realisierbar ist, zeigt Fig. 4. Hierbei sind die Ringhälften 4a und 4b je für sich auf einem Support 29a und 29b angeordnet, und jeder dieser beiden Supporte 29a und 29b ist auf einer auf der Quertraverse 7 des Maschinegestells 1 angeordneten Querführung 28a und 28b verfahrbar. Angetrieben werden die Supporte über parallel zu den Querführungen 28a und 28b angeordnete Spindeln 30a und 30b, die je von einem Motor 31a und 31b angetrieben werden können. Die gestellseitigen Spannvorrichtungen 8 sind hier an den Supporten 29a und 29b angeordnet und im übrigen in gleicher Weise wie bei den vorbeschriebenen Ausführungsbeispielen ausgeführt. Entsprechend haben die beiden Ringhälften 4a und 4b je für sich eine Schnellspannaufnahme 19 an ihrer Unterseite, die in gleicher Weise wie bei den vorbeschriebenen Ausführungsbeispielen ausgebildet ist.

Mit der Ausführungsform nach Fig. 4 kann man einen nahezu rüstzeitfreien Wechsel der Halteringe 4 durchführen. Man läßt zwischen dem letzten Werkstück 3 der bereits ummantelten Werkstückfolge und dem ersten Werkstück 3 der nächstfolgenden Serie, deren Werkstücke ein anderes Format haben oder anders ummantelt werden, eine Lücke und läßt entsprechend bei dem dieser Lücke zugeordneten Folienabschnitt den Kleber weg. Aufgrund des Vorschubs der Werkstücke wandert diese Lücke entlang der Transportvorrichtung 2, und jeweils dort, wo sich gerade die Lücke befindet, fährt man entweder die Ringhälften 4a und 4b auseinander bzw. weiter zusammen oder wechselt nach dem Auseinanderfahren die Ringhälften 4a und 4b gegen anders gerüstete Ringhälften aus.

Im letzteren Falle beim Einwechseln von Ringhälften 4a und 4b, die anders als die zuvor benötigten Ringhälften ausgerüstet sind, erfolgt die Verstellung über die elektrischen Motore 31a und 31b, die elektronischen Achsen zugeordnet sind. So kann jede Ringhälfte 4a und 4b, die neu eingewechselt worden ist, sich auf das neu einfahrende Profil einstellen und exakt positionieren, während die Ringhälften des zuvor ummantelten Profils, die nun nicht mehr benötigt werden, über die genannte Achsensteuerung aus der Maschine herausgefahren werden.

## Patentansprüche

1. Maschine zum Ummanteln von länglichen Werkstücken, wie Leisten, Bretter oder dergleichen, mittels einem bandförmigen Beschichtungsmaterial, wie einem Furnier oder einer Folie, mit einer Vorschubvorrichtung (2), auf der die Werkstücke (3) in ihrer Längsrichtung gefördert werden und die zumindest entlang eines Abschnittes von mehreren, in Vorschubrichtung hintereinander angeordneten Halteringen (4) umgeben ist, deren Ebenen jeweils senkrecht zur Vorschubrichtung stehen und an denen Haltearme (5) mit daran gelagerten Rollen (6) zum Heranführen und/ oder Andrücken des Beschichtungsmaterials an die durch die Halteringe (4) hindurchlaufenden Werkstücke (3) angeordnet sind, wobei diese Halteringe (4) von dem Maschinengestell (1) lösbar sind,
**dadurch gekennzeichnet,**
**daß** am Maschinengestell (1) hilfskraftbetätigte Schnellspannvorrichtungen (8) angeordnet sind und die darauf aufsetzbaren Halteringe (4) an ihren Unterseiten entsprechende Schnellspannaufnahmen (19) haben.

2. Maschine nach Anspruch 1,
**dadurch gekennzeichnet,**
**daß** die Schnellspannvorrichtungen (8) am Maschinengestell (1) höhenverschiebliche Verriegelungsbolzen (10) mit hinterschnittenen Köpfen (11) aufweisen und an den Schnellspannaufnahmen (19) der Halteringe (4) die Köpfe (11) der Verriegelungsbolzen (10) untergreifende Sicherungselemente (23) vorgesehen sind, über die in abgesenkter Lage der Verriegelungsbolzen (10) die Halteringe (4) gegen die gestellseitigen Schnellspannvorrichtungen (8) verspannt sind.

3. Maschine nach Anspruch 2,
**dadurch gekennzeichnet,**
**daß** die Schnellspannvorrichtungen (8) am Maschinengestell (1) jeweils eine Spannplatte (9) haben, durch die zumindest einer der höhenverschieblichen Verriegelungsbolzen (10) hindurchtritt, und die ringseitigen Schnellspannaufnahmen (19) jeweils eine Bodenplatte (20) an den Halteringen (4) aufweisen, die entsprechend zumindest eine Durchgangsöffnung (21) für den Durchtritt des Verriegelungsbolzens (10) der Schnellspannvorrichtung (8) hat und auf deren Oberseite das den Kopf (11) des Verriegelungsbolzens (10) in dessen angehobener Lage untergreifende Sicherungselement (23) auflegbar ist.

4. Maschine nach Anspruch 3,
**dadurch gekennzeichnet,**
**daß** das auf die Bodenplatte (20) der ringseitigen Schnellspannaufnahme (19) auflegbare Sicherungselement (23) einen einendig offenen Schlitz (24) aufweist, dessen Weite an den Durchmesser der Hinterschneidung (12) des Kopfes (11) des Verriegelungsbolzens (10) der gestellseitigen Schnellspannvorrichtung (8) angepaßt ist.

5. Maschine nach Anspruch 3 oder 4,
**dadurch gekennzeichnet**,
die Spannplatte (9) der gestellseitigen Schnellspannvorrichtung (8) quer zur Vorschubrichtung der Werkstücke (3) bzw. der Längsrichtung des Maschinengestells (1) an geordnete Führungsvorrichtungen (15) zur Führung der Halteringe (4) an deren Unterseiten beim Aufschub auf das Maschinengestell (1) von dessen Längsseiten her haben.

6. Maschine nach Anspruch 5,
**dadurch gekennzeichnet**,
die Führungsvorrichtungen (15) jeweils aus zwei an der Spannplatte (9) nach oben vorstehenden, miteinander parallelen Führungsschienen (15a, 15b) bestehen, zwischen denen der betreffende Haltering (4) einschiebbar ist.

7. Maschine nach Anspruch 5 oder 6,
**dadurch gekennzeichnet,**
**daß** am einen Ende des durch die Führungsvorrichtung (15) vorgegebenen Führungsweges ein Anschlag (14) für die Vorpositionierung des Halteringes (4) angeordnet ist.

8. Maschine nach einem der Ansprüche 1 bis 7,
**dadurch gekennzeichnet,**
**daß** die Halteringe (4) bezogen auf die Vorschubrichtung in eine linke Ringhälfte (4a) sowie eine rechte Ringhälfte (4b) unterteilt sind und jede Ringhälfte (4a, 4b) einen Abschnitt der Bodenplatte (20) mit zumindest einer Durchgangsöffnung (21) aufweist, wobei die gestellseitigen Spannvorrichtungen (8) je Ringhälfte (4a, 4b) zumindest einen Verriegelungsbolzen (10) haben.

9. Maschine nach Anspruch 8,
**dadurch gekennzeichnet,**
**daß** je Ringhälfte (4a, 4b) eine gestellseitige Spannvorrichtung (8a, 8b) vorgesehen ist und beide Spannvorrichtungen (8a, 8b) quer zur Vorschubrichtung bzw. zur Längsrichtung des Maschinengestells (1) verfahrbar sind.

10. Maschine nach Anspruch 9,
**dadurch gekennzeichnet,**
**daß** die beiden Spannvorrichtungen (8a, 8b) mittels Supporten (29a, 29b) auf Querführungen (28a, 28b) auf dem Maschinengestell (1) angeordnet und die Supporte (29a, 29b) über Spindelantriebe (30a, 30b) verfahrbar sind.
